# EUROPEAN PATENT SPECIFICATION

(11) **EP 4 244 513 B1**
(45) Date of publication and mention of the grant of the patent: **01.01.2025**
(21) Application number: 21802734.0
(22) Date of filing: 04.11.2021
(51) Int. Cl.: F16L 3/10, F16L 3/11, F16L 55/035

(54) **PIPE CLAMP WITH ACUTELY ANGLED FLANGE**
ROHRSCHELLE MIT SPITZWINKLIGEM FLANSCH
COLLIER DE SERRAGE AVEC UNE BRIDE FORMANT UN AIGLE AIGU

(30) Priority: 16.11.2020 EP 20207688
(43) Date of publication of application: 20.09.2023
(73) Proprietor: Hilti Aktiengesellschaft, 9494 Schaan (LI)
(72) Inventor: TATIC, Uros, 2700 Wiener Neustadt (AT)
(74) Representative: Hilti Aktiengesellschaft Corporate Intellectual Property
(86) International application number: PCT/EP2021/080657
(87) International publication number: WO 2022/101085

(56) References cited:
- EP-A1- 0 597 805
- EP-B1- 0 597 805
- DE-A1- 102015 112 936

## Description

The invention relates to a pipe clamp according to the preamble of claim 1.

Pipe clamps are mechanical devices that are used to grip and to hold the outside diameter of a pipe and to ensure its positioning. A common design present on the market comprises two clamping parts, which, when closed together, form a more or less full circle that encloses the pipe. One or more of the clamping parts can be provided with flanges for mutual locking of the clamping parts.

EP0597805 A1 discloses pipe clamps having a quick lock mechanism. This quick lock mechanism comprises a toothed rack provided on the first clamping part and a pawl flap provided on a locking flange of the second clamping, wherein the pawl flap catches teeth of the toothed rack when the toothed rack is inserted into said flange.

It is an object of the invention to provide a pipe clamp that can be installed in a particularly easy manner, and which has particularly good performance, in particular load bearing characteristics, at particular low expenditure.

This object is achieved by a device according to claim 1. Dependent claims refer to preferred embodiments of the invention.

The invention provides a pipe clamp comprising
- a first clamping part, wherein the first clamping part comprises a first bow having a first end and an opposite second end, wherein the first clamping part further comprises a connector rod receiver bore that is provided at the first bow for receiving a connector rod so as to connect the pipe clamp to the connector rod, wherein the connector rod receiver bore defines a load axis of the pipe clamp, and wherein the first clamping part further comprises a locking pin having a locking tooth, which locking pin protrudes from the first bow at the first end of the first bow, and
- a second clamping part, wherein the second clamping part comprises a second bow having a first end and an opposite second end, wherein the second clamping part further comprises a locking flange that is connected to the second bow at the first end of the second bow, wherein a pin receiver opening for receiving the locking pin is provided in the locking flange, wherein the second clamping part further comprises a pawl flap and a hinge, which pivotably connects the pawl flap to the locking flange, wherein the pawl flap projects from the hinge towards the second bow, and wherein the pawl flap allows insertion of the locking pin into the pin receiver opening and prevents withdrawal of the locking pin from the pin receiver opening by catching the locking tooth of the locking pin,
- wherein the first bow and the second bow are connected with each other at their respective second ends,
- wherein the locking flange of the second clamping part lies on a flange plane, and
- wherein, when the locking pin is arranged in the pin receiver opening and the pawl flap engages the locking tooth, the flange plane intersects the load axis, thereby defining a flange-load intersection angle (α), which opens towards the connector rod receiver bore,
   **characterized** in that
- the flange-load intersection angle (α) is an acute angle, which ranges from 35° to 75°.

The load axis is the direction of gravity and usually the primary load direction when the pipe clamp is installed as intended. The invention proposes to arrange the locking flange of the second clamping part in a non-perpendicular relationship with respect to said load axis (namely at an acute angle with respect to said load axis) when the pipe is closed, wherein the acute angle opens towards the connector rod receiver bore, i.e. towards the contact area between the pipe clamp and the connector rod. This results in a modified load distribution when the interface between the first clamping part and the second clamping part is loaded as intended, i.e. loaded parallel to the load axis: In contrast to a conventional perpendicular arrangement of said locking flange, in which said locking flange (and the pawl flap) is loaded orthogonally to the flange plane, the acute arrangement allows that a portion of the load is transferred within the locking flange, i.e. parallel thereto (in particular, said load portion can be received by the pawl flap and transferred to the locking flange via the hinge). As a consequence, stress within the material and deformation can be reduced, which can provide for particularly high performance, and in particular, the following advantages can be achieved:
- Increased load capacity.
- Self-locking geometry (i.e. load increase results in increase of geometric locking between the first clamping part and the second clamping part). This, in term, can allow higher tolerances for the clamping parts, which can facilitate production.
- Equalized closing kinematics (more equal utilization of bow lengths).
- Simplified usage and manipulation (due to more space for installer's hand).
- Simplified assembly during production due to increased space.
- Smaller rotation of pawl flap required before engaging connection with locking pin.

The pipe clamp is intended for clamping a pipe which is arranged between the first clamping part and the second clamping part. The first clamping part and/or the second clamping part are preferably metal parts, in particular steel parts. They might have coatings and/or inlays, e.g. thermally and/or acoustically insulating inserts. The first bow and/or the second bow are each curved, so as to clasp around a pipe; in particular, they are generally circular segments. Preferably, the locking pin, the first bow and, if applicable, also a first screw flange, are monolithic. Preferably, the locking flange, the second bow and, if applicable, also a second screw flange, are monolithic. The pawl flap can also be preferably a metal part, in particular a steel part.

The connector rod receiver bore allows that a connector rod is arranged therein, for connecting, preferably screw-connecting, the first clamping part and thus the pipe clamp to the connector rod. The connector rod receiver bore is preferably provided in a nut that is attached to the first bow, in particular if the connector rod receiver bore is internally threaded. However, the connector rod receiver bore could also be provided within the first bow, in particular if the connector rod receiver bore is unthreaded. The longitudinal axis of the connector rod receiver bore is the load axis of the pipe clamp. If the connector rod receiver bore is internally threaded, the thread axis is the load axis of the pipe clamp.

The flange-load intersection angle is an acute angle when the pipe clamp is closed, i.e. in a state in which the first bow and the second bow are connected with each other at their respective second ends, and in which the first bow and the second bow are also connected with each other at their respective first ends, namely by means of the pawl flap engaging the locking tooth.

The pawl flap is arranged to pivot away from the locking flange and/or from the second bow as the locking pin is inserted into the pin receiver opening. In particular in regions of the pawl flap that are spaced from the hinge, the pawl flap is arranged on an underside of the connector flange that faces away from the first bow. The pawl flap and the locking pin form a ratchet mechanism, which allows insertion of the locking pin into the connector hole, but prevents withdrawal thereof. The hinge is arranged at an end region of the locking flange that is spaced from the first bow, and the pawl flap extends from the hinge towards the second bow. The pin receiver opening might be located within the locking flange only, or it may also additionally extend into the second bow to facilitate passage of the locking pin.

The flange-load intersection angle α opens towards the connector rod receiver bore. Thus, the flange-load intersection angle α is defined as that angle which is open towards the connector rod receiver bore and which faces the connector rod receiver bore (and not its opposite angle, which would be obtuse). In particular, the flange-load intersection angle α can be that angle that spans from the locking flange or/and from the flange plane to the connector rod receiver bore.

The flange-load intersection angle (α) ranges from 35° to 75°, i.e. it is greater than or equal to 35° and smaller than or equal to 75°. More preferably, it ranges from 45° to 65°. In particular, the flange-load intersection angle can be 55° ± 5°. These angle ranges can provide particularly advantageous force distribution whilst effectively preventing geometric conflicts, in particular of the closure mechanism.

The locking pin can have only a single tooth, i.e. the locking tooth. In this case, the locking pin can e.g. be a headed bolt, wherein the head provides the locking tooth. It is, however, particularly preferred that the locking pin is a toothed rack comprising, in addition to the locking tooth, at least one auxiliary tooth. The at least one auxiliary tooth can also be caught by the pawl flap for closure at a different position. This can provide particularly good versatility. The locking tooth is a selected tooth of the toothed rack, which provides the discussed flange-load intersection angle. The discussed flange-load intersection angle can also be provided when the at least one auxiliary tooth is engaged by the pawl flap, or the flange-load intersection angle might different when the at least one auxiliary tooth is engaged by the pawl flap.

As already hinted at above, it is particularly preferred if the connector rod receiver bore is internally threaded for connecting the pipe clamp to a threaded connector rod. The internal thread can then define the load axis. Accordingly, a screw connection is provided between the connector rod and the pipe clamp, which can be particularly easy to establish and yet reliable. In particular, the internally threaded rod receiver bore can be provided on a separate nut, which is attached to the first bow.

According to another preferred embodiment of the invention, the first clamping part comprises a first screw flange that is connected to the first bow at the second end of the first bow, the second clamping part comprises a second screw flange that is connected to the second bow at the second end of the second bow, and the first bow and the second bow are connected with each other at their respective second ends by means of a tightening screw which passes through the first screw flange and through the second screw flange. This can provide a particularly easy to establish and yet reliable connection.

The invention is explained in greater detail below with reference to preferred exemplary embodiments, which are depicted schematically in the accompanying drawings.
Figure 1 is a sectional view of pipe clamp, wherein the sectional plane is a longitudinal plane that includes the load axis and that is perpendicular to the flange plane.
Figure 2 is a detail view of the pipe clamp of figure 1 showing the load distribution at the locking flange.
Figure 3 is another detail view of the pipe clamp of figure 1 showing the pawl flap in an open position as the locking pin passes.

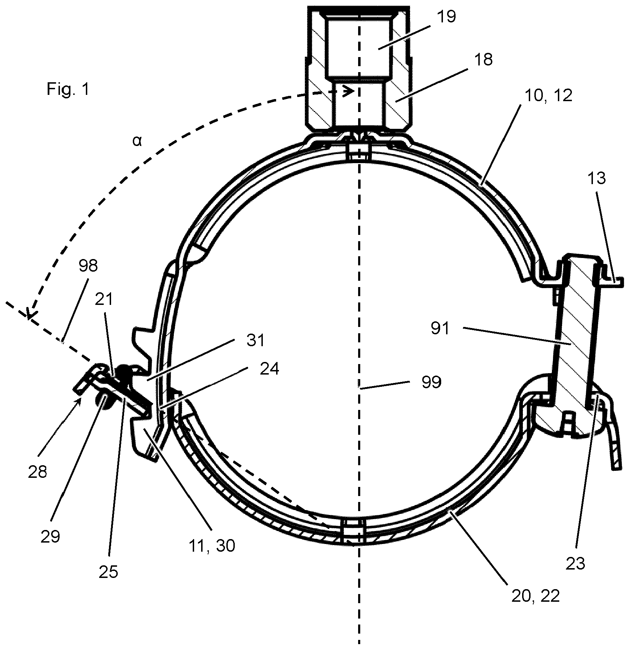

Figures 1 to 3 show an example of a pipe clamp. The pipe clamp comprises a first clamping part 10 and a second clamping part 20, between which a pipe (not shown) is intended to be arranged.

The first clamping part 10 comprises a first bow 12 intended to encompass the pipe, wherein the first bow 12 has a first end, and at the opposite end of the first bow 12, a second end. The first clamping part 10 furthermore comprises a locking pin 11, which projects from the first bow 12 at the first end thereof. The first clamping part 10 furthermore comprises a first screw flange 13, which projects from the first bow 12 at the second end thereof. The locking pin 11, the first bow 12 and the first screw flange 13 form a monolithic part.

The first clamping part 10 furthermore comprises a - by way of example internally threaded - rod receiver bore 19. In the present embodiment, the internally threaded rod receiver bore 19 is, by way of example, provided within a nut 18 which is arranged on and connected to the first bow 12. The rod receiver bore 19 is intended for receiving, in particular screwingly receiving, a connector rod, in particular a threaded connector rod, for connecting the pipe clamp to a building. The rod receiver bore 19 defines a load axis 99 of the pipe clamp - this load axis 99 of the pipe clamp is the thread axis of the internally threaded rod receiver bore 19. In alternative embodiments, the rod receiver bore 19 might be unthreaded and/or be provided within the first bow 12.

The locking pin 11 comprises a locking tooth 30. In the present embodiment, the locking tooth 30 is formed as a notch provided in the limbs of the generally U-shaped locking pin 11. In the present embodiment, the locking pin 11 is a toothed rack, comprising, in addition to the locking tooth 30, at least one auxiliary tooth 31 (two auxiliary teeth 31 in the present example).

The second clamping part 20 comprises a second bow 22 intended to encompass the pipe, wherein the second bow 22 has a first end, and at the opposite end of the second bow 22, a second end. The second clamping part 20 further comprises a locking flange 21, which projects from the second bow 22 at the first end thereof. The second clamping part 20 furthermore comprises a second screw flange 23, which projects from the second bow 22 at the second end thereof. The locking flange 21, the second bow 22 and the second screw flange 23 form a monolithic part.

The locking flange 21 has a pin receiver opening 24, which passes through the locking flange 21. The second clamping part 20 furthermore comprises a pawl flap 25, which is arranged adjacent to the locking flange 21, and which is pivotably connected to the locking flange 21 via a hinge 28. The pawl flap 25 is arranged on an underside of the locking flange 21 that is located adjacent to the second bow 22, and that faces away from the first bow 12. In other words, the pawl flap 25 is arranged adjacent to the second bow 22. The pawl flap 25 points from the hinge 28 towards the second bow 22. Thus, the pawl flap 25 extends between the second bow 22 and the hinge 28. The second clamping part 20 further comprises a spring 29 that urges the pawl flap 25 into a closed position, i.e. into a position adjoining the locking flange 21. In the present embodiment, the spring 29 is an elastic band that encompasses the locking flange 21 and the pawl flap 25. In the present embodiment, the hinge 28 comprises, by way of example, a hinge tab provided on the pawl flap 25, which hinge flap passes through a hinge opening within the locking flange 21, and a L-structure provided at the end of the locking flange 21.

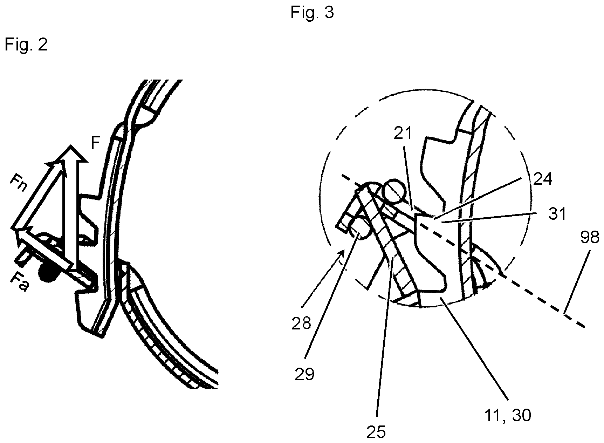

The pawl flap 25 provides a catch for catching the locking tooth 30. In particular, when the locking pin 11 is inserted into the pin receiver opening 24 of the locking flange 21, the pawl flap 25 pivots into an open position (as schematically shown in figure 3), and is then, by means of the spring 29, forced back into a closed position, in which the pawl flap 25 is generally parallel with respect to the locking flange 21, in which it partly obstructs the pin receiver opening 24 and engages the locking tooth 30 or the auxiliary tooth 31, respectively.

Figures 1 and 2 show the pipe clamp in a closed state. In this state, the pawl flap 25 engages into the locking tooth 30. This provides a first connection between the first clamping part 10 and the second clamping part 20 (or a first connection between the first bow 12 and the second bow 22, respectively).

The first screw flange 13, which is arranged on the first bow 12, has an internally threaded through bore. The second screw flange 23, which is arranged on the second bow 22, has a through bore. A headed tightening screw 91 passes through the through bore that is provided within the first screw flange 13 into the internally threaded through bore that is provided in the second screw flange 23, thereby providing a second connection between the first clamping part 10 and the second clamping part 20 (or a second connection between the first bow 12 and the second bow 22, respectively).

The locking flange 21 of the second clamping part 20 lies on a flange plane 98. When the pipe clamp is in the illustrated closed state in which the pawl flap 25 engages the locking tooth 30, the flange plane 98 intersects the load axis 99, thereby defining a flange-load intersection angle α, which opens towards the connector rod receiver bore 19 (and towards the first bow 12). This flange-load intersection angle α is an acute angle of about 55°.

Figure 2 schematically illustrates the load distribution resulting from this acute-angled arrangement. As can be gathered from this figure, the closure force F divides into normal force Fn and axial force Fa (directed parallel to the locking flange 21), and normal force Fn is thus reduced as compared to a conventional setup where the flange-load intersection angle α is 90°. Accordingly, load capacity can be increased. In addition, improved self-locking can be achieved. Moreover, the acute orientation of the pawl flap 25 can results in a smaller rotation requirement of the pawl flap 25 when the locking pin 11 is inserted into the pin receiver opening 24.

## Claims

1. Pipe clamp comprising
- a first clamping part (10), wherein the first clamping part (10) comprises a first bow (12) having a first end and an opposite second end, wherein the first clamping part (10) further comprises a connector rod receiver bore (19) that is provided at the first bow (12) for receiving a connector rod so as to connect the pipe clamp to the connector rod, wherein the connector rod receiver bore (19) defines a load axis (99) of the pipe clamp, and wherein the first clamping part (10) further comprises a locking pin (11) having a locking tooth (30), which locking pin (11) protrudes from the first bow (12) at the first end of the first bow (12), and
- a second clamping part (20), wherein the second clamping part (20) comprises a second bow (22) having a first end and an opposite second end, wherein the second clamping part (20) further comprises a locking flange (21) that is connected to the second bow (22) at the first end of the second bow (22), wherein a pin receiver opening (24) for receiving the locking pin (11) is provided in the locking flange (21), wherein the second clamping part (20) further comprises a pawl flap (25) and a hinge (28), which pivotably connects the pawl flap (25) to the locking flange (21), wherein the pawl flap (25) projects from the hinge (28) towards the second bow (22), and wherein the pawl flap (25) allows insertion of the locking pin (11) into the pin receiver opening (24) and prevents withdrawal of the locking pin (11) from the pin receiver opening (24) by catching the locking tooth (30) of the locking pin (11),
- wherein the first bow (12) and the second bow (22) are connected with each other at their respective second ends,
- wherein the locking flange (21) of the second clamping part (20) lies on a flange plane (98), and
- wherein, when the locking pin (11) is arranged in the pin receiver opening (24) and the pawl flap (25) engages the locking tooth (30), the flange plane (98) intersects the load axis (99), thereby defining a flange-load intersection angle (α), which opens towards the connector rod receiver bore (19),
**characterized in that**
- the flange-load intersection angle (α) is an acute angle, which ranges from 35° to 75°.

2. Pipe clamp according to claim 1,
**characterized in that**
the flange-load intersection angle (α) is 55° ± 5°.

3. Pipe clamp according to any of the preceding claims,
**characterized in that**
the locking pin (11) is a toothed rack comprising, in addition to the locking tooth (30), at least one auxiliary tooth (31).

4. Pipe clamp according to any of the preceding claims,
**characterized in that**
the connector rod receiver bore (19) is internally threaded for connecting the pipe clamp to a threaded connector rod.

5. Pipe clamp according to any of the preceding claims,
**characterized in that**
the first clamping part (10) comprises a first screw flange (13) that is connected to the first bow (12) at the second end of the first bow (12),
the second clamping part (20) comprises a second screw flange (23) that is connected to the second bow (22) at the second end of the second bow (22), and
the first bow (12) and the second bow (22) are connected with each other at their respective second ends by means of a tightening screw (91) which passes through the first screw flange (13) and through the second screw flange (23).

## Patentansprüche

1. Rohrschelle, umfassend
- ein erstes Klemmteil (10), wobei das erste Klemmteil (10) einen ersten Bogen (12) mit einem ersten Ende und einem gegenüberliegenden zweiten Ende umfasst, wobei das erste Klemmteil (10) ferner eine Verbindungsstabaufnahmebohrung (19) umfasst, die an dem ersten Bogen (12) bereitgestellt ist, um einen Verbindungsstab so aufzunehmen, dass die Rohrschelle mit dem Verbindungsstab verbunden wird, wobei die Verbindungsstabaufnahmebohrung (19) eine Lastachse (99) der Rohrschelle definiert, und wobei das erste Klemmteil (10) ferner einen Verriegelungsstift (11) mit einem Verriegelungszahn (30) umfasst, wobei der Verriegelungsstift (11) an dem ersten Ende des ersten Bogens (12) aus dem ersten Bogen (12) hervorsteht, und
- ein zweites Klemmteil (20), wobei das zweite Klemmteil (20) einen zweiten Bogen (22) mit einem ersten Ende und einem gegenüberliegenden zweiten Ende umfasst, wobei das zweite Klemmteil (20) ferner einen Verriegelungsflansch (21) umfasst, der an dem ersten Ende des zweiten Bogens (22) mit dem zweiten Bogen (22) verbunden ist, wobei in dem Verriegelungsflansch (21) eine Stiftaufnahmeöffnung (24) zum Aufnehmen des Verriegelungsstifts (11) bereitgestellt ist, wobei das zweite Klemmteil (20) ferner eine Sperrklinkenklappe (25) und ein Scharnier (28) umfasst, das die Sperrklinkenklappe (25) schwenkbar mit dem Verriegelungsflansch (21) verbindet, wobei die Sperrklinkenklappe (25) aus dem Scharnier (28) in Richtung des zweiten Bogens (22) hervorsteht, und wobei die Sperrklinkenklappe (25) das Einführen des Verriegelungsstifts (11) in die Stiftaufnahmeöffnung (24) ermöglicht und das Herausziehen des Verriegelungsstifts (11) aus der Stiftaufnahmeöffnung (24) verhindert, indem sie den Verriegelungszahn (30) des Verriegelungsstifts (11) auffängt,
- wobei der erste Bogen (12) und der zweite Bogen (22) an ihren jeweiligen zweiten Enden miteinander verbunden sind,
- wobei der Verriegelungsflansch (21) des zweiten Klemmteils (20) auf einer Flanschebene (98) liegt, und
- wobei, wenn der Verriegelungsstift (11) in der Stiftaufnahmeöffnung (24) angeordnet ist und die Sperrklinkenklappe (25) in den Verriegelungszahn (30) eingreift, die Flanschebene (98) die Lastachse (99) schneidet und dadurch einen Flansch-Last-Schnittwinkel (α) definiert, der sich in Richtung der Verbindungsstabaufnahmebohrung (19) öffnet,
**dadurch gekennzeichnet, dass**
- der Flansch-Last-Schnittwinkel (α) ein spitzer Winkel ist, der zwischen 35° und 75° beträgt.

2. Rohrschelle nach Anspruch 1,
**dadurch gekennzeichnet, dass**
der Flansch-Last-Schnittwinkel (a) 55° ± 5° beträgt.

3. Rohrschelle nach einem der vorstehenden Ansprüche,
**dadurch gekennzeichnet, dass**
der Verriegelungsstift (11) eine Zahnstange ist, die zusätzlich zum Verriegelungszahn (30) mindestens einen Hilfszahn (31) umfasst.

4. Rohrschelle nach einem der vorstehenden Ansprüche,
**dadurch gekennzeichnet, dass**
die Verbindungsstabaufnahmebohrung (19) mit einem Innengewinde zum Verbinden der Rohrschelle mit einem mit Gewinde versehenen Verbindungsstab versehen ist.

5. Rohrschelle nach einem der vorstehenden Ansprüche,
**dadurch gekennzeichnet, dass**
das erste Klemmteil (10) einen ersten Schraubflansch (13) umfasst, der am zweiten Ende des ersten Bogens (12) damit verbunden ist,
das zweite Klemmteil (20) einen zweiten Schraubflansch (23) umfasst, der am zweiten Ende des zweiten Bogens (22) mit dem zweiten Bogen (22) verbunden ist, und
der erste Bügel (12) und der zweite Bügel (22) an ihren jeweiligen zweiten Enden mittels einer Spannschraube (91), die durch den ersten Schraubflansch (13) und durch den zweiten Schraubflansch (23) verläuft, miteinander verbunden sind.

## Revendications

1. Collier de serrage comprenant
- une première partie de serrage (10), dans lequel la première partie de serrage (10) comprend un premier arc (12) ayant une première extrémité et une seconde extrémité opposée, dans lequel la première partie de serrage (10) comprend en outre un trou de réception de bielle de liaison (19) qui est pourvu au niveau du premier arc (12) pour recevoir une bielle de liaison de manière à relier le collier de serrage à la bielle de liaison, dans lequel le trou de réception de bielle de liaison (19) définit un axe de charge (99) du collier de serrage, et dans lequel la première partie de serrage (10) comprend en outre une goupille de verrouillage (11) présentant une dent de verrouillage (30), laquelle goupille de verrouillage (11) fait saillie à partir du premier arc (12) au niveau de la première extrémité du premier arc (12), et
- une seconde partie de serrage (20), dans lequel la seconde partie de serrage (20) comprend un second arc (22) ayant une première extrémité et une seconde extrémité opposée, dans lequel la seconde partie de serrage (20) comprend en outre une bride de verrouillage (21) qui est reliée au second arc (22) au niveau de la première extrémité du second arc (22), dans lequel une ouverture de réception de goupille (24) pour recevoir la goupille de verrouillage (11) est pourvue dans la bride de verrouillage (21), dans lequel la seconde partie de serrage (20) comprend en outre un rabat à cliquet (25) et une charnière (28) qui relie de manière pivotante le rabat à cliquet (25) à la bride de verrouillage (21), dans lequel le rabat à cliquet (25) fait saillie à partir de la charnière (28) vers le second arc (22), et dans lequel le rabat à cliquet (25) permet l'insertion de la goupille de verrouillage (11) dans l'ouverture de réception de goupille (24) et empêche le retrait de la goupille de verrouillage (11) de l'ouverture de réception de goupille (24) en attrapant la dent de verrouillage (30) de la goupille de verrouillage (11),
- dans lequel le premier arc (12) et le second arc (22) sont reliés l'un à l'autre au niveau de leurs secondes extrémités respectives,
- dans lequel la bride de verrouillage (21) de la seconde partie de serrage (20) se trouve sur un plan de bride (98), et
- dans lequel, lorsque la goupille de verrouillage (11) est disposée dans l'ouverture de réception de goupille (24) et que le rabat à cliquet (25) vient en prise avec la dent de verrouillage (30), le plan de bride (98) coupe l'axe de charge (99), définissant ainsi un angle d'intersection bride-charge (a), qui s'ouvre vers le trou de réception de bielle de liaison (19), **caractérisé en ce que**
- l'angle d'intersection bride-charge (a) est un angle aigu compris entre 35° et 75°.

2. Collier de serrage selon la revendication 1,
**caractérisé en ce que**
l'angle d'intersection bride-charge (a) est de 55° ± 5°.

3. Collier de serrage selon l'une quelconque des revendications précédentes,
**caractérisé en ce que**
la goupille de verrouillage (11) est une crémaillère comprenant, outre la dent de verrouillage (30), au moins une dent auxiliaire (31).

4. Collier de serrage selon l'une quelconque des revendications précédentes,
**caractérisé en ce que**
le trou réception de bielle de liaison (19) est fileté intérieurement pour relier le collier de serrage à une bielle de liaison filetée.

5. Collier de serrage selon l'une des revendications précédentes,
**caractérisé en ce que**
la première partie de serrage (10) comprend une première bride à vis (13) qui est reliée au premier arc (12) au niveau de la seconde extrémité du premier arc (12),
la seconde partie de serrage (20) comprend une seconde bride à vis (23) qui est reliée au second arc (22) au niveau de la seconde extrémité du second arc (22), et
le premier arc (12) et le second arc (22) sont reliés l'un à l'autre au niveau de leurs secondes extrémités respectives au moyen d'une vis de serrage (91) qui traverse la première bride à vis (13) et la seconde bride à vis (23).
